# EUROPEAN PATENT APPLICATION

(11) **EP 4 741 443 A1**
(43) Date of publication of application: **13.05.2026**
(21) Application number: 24839589.9
(22) Date of filing: 02.07.2024
(51) Int. Cl.: C08G 77/54, C08G 77/06

(54) **ORGANOPOLYSILOXANE HAVING TERTIARY AMINO GROUP IN MOLECULAR CHAIN AND METHOD FOR PRODUCING SAME**

(30) Priority: 07.07.2023 JP 2023112192
(71) Applicant: SHIN-ETSU CHEMICAL CO., LTD., Tokyo 100-0005 (JP)
(72) Inventor: WATANABE Takuma, Annaka-shi, Gunma 379-0224 (JP)
(74) Representative: V.O.
(86) International application number: PCT/JP2024/023929
(87) International publication number: WO 2025/013697

(57) **Abstract**

[Object] One of the purposes of the present invention is to provide an organopolysiloxane that is an intermediate compound for providing a silicone macromer having a quaternary ammonium cation site in a molecular chain in which a (meth)acrylic group is introduced in a high percentage at both terminals.

[Solution] The present invention provides an organopolysiloxane having a tertiary amino group in a molecular chain represented by the following general formula (1): 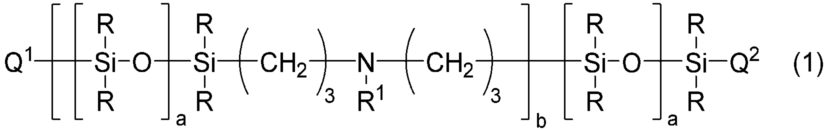 wherein, in general formula (1) R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a group represented by the following formula (2) or the following formula (3); "a" is an integer of 1 to 400; and "b" is an integer of 1 to 50; 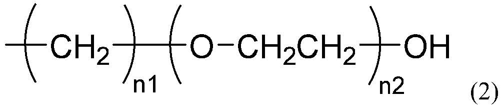 wherein, in formula (2), "n1" is an integer of 2 to 10, and "n2" is an integer of 0 to 10; 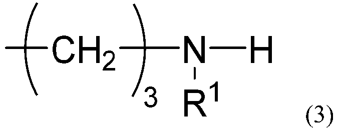 wherein, in formula (3), R¹ is a group selected from an alkyl group having 1 to 10 carbon atoms, an aryl group having 6 to 10 carbon atoms, and an aralkyl group having 7 to 10 carbon atoms.

## Description

### TECHNICAL FIELD

The present invention relates to an organopolysiloxane having a tertiary amino group in a molecular chain, and a method for producing the same.

### BACKGROUND ART

Silicone is widely used as a contact lens material due to its high oxygen permeability. However, since silicone is hydrophobic, the introduction of hydrophilic groups is being considered to make the contact lens surface hydrophilic. Among such considerations, the introduction of quaternary ammonium cation sites in silicone chains has been reported (Patent Literature 1 to 4). Among such reports, Patent Literature 1 describes a method for synthesizing a silicone macromer having a polymerizable group at both terminals and having a quaternary ammonium cation site in a molecular chain.

### PRIOR LITERATURE

### PATENT LITERATURE

Patent Literature 1: JP National Phase Laid-Open No. 2009-542855
Patent Literature 2: JP National Phase Laid-Open No. 2009-533532
Patent Literature 3: JP National Phase Laid-Open No. 2010-516873
Patent Literature 4: JP National Phase Laid-Open No. 2009-521547

### SUMMARY OF THE INVENTION

### PROBLEM TO BE SOLVED BY THE INVENTION

However, it is inferred that in a production method according to Patent Literature 1, a certain amount of silicone without polymerizable groups is contained as an impurity. It is unfavorable for silicone that is typically used as a contact lens material to contain a large amount of compounds without polymerizable groups. It is therefore desirable to establish a method for producing a silicone macromer having a quaternary ammonium cation site in a molecular chain in which a (meth)acrylic group is introduced in a high percentage at both terminals.

One of the purposes of the present invention is to provide an organopolysiloxane that is an intermediate compound for providing a silicone macromer having a quaternary ammonium cation site in a molecular chain in which a (meth)acrylic group is introduced in a high percentage at both terminals.

### MEANS FOR SOLVING THE PROBLEMS

As a result of diligent research to achieve the aforementioned purpose, the inventor found a production method to synthesize a silicone macromer having a quaternary ammonium cation site in a molecular chain in which a (meth)acrylic group is introduced in a high percentage at both terminals. The inventor synthesized a novel tertiary amino group-containing organopolysiloxane to be used as an intermediate compound of the production method, thereby completing the present invention.

That is, the present invention provides an organopolysiloxane having a tertiary amino group in a molecular chain represented by the following general formula (1): 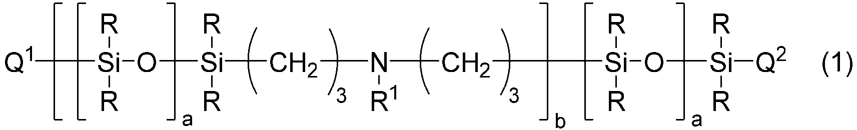
wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a group represented by the following formula (2) or the following formula (3); "a" is an integer of 1 to 400; and "b" is an integer of 1 to 50; 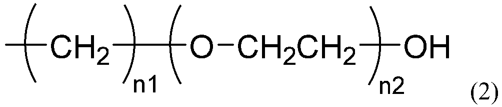
wherein, in formula (2), "n1" is an integer of 2 to 10, and "n2" is an integer of 0 to 10; 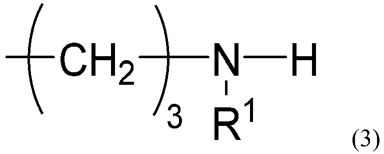
wherein, in formula (3), R¹ is a group selected from an alkyl group having 1 to 10 carbon atoms, an aryl group having 6 to 10 carbon atoms, and an aralkyl group having 7 to 10 carbon atoms.

Preferably, the organopolysiloxane further comprises the constituent features of the following items [1], [2], or [3].
[1] The organopolysiloxane, wherein, in said general formula (1), Q¹ and Q² both are a group represented by said formula (2).
[2] The organopolysiloxane, wherein, in said general formula (1), one of Q¹ and Q² is a group represented by said formula (2), and the other of Q¹ and Q² is a group represented by said formula (3).
[3] The organopolysiloxane, wherein, in said general formula (1), Q¹ and Q² both are a group represented by said formula (3).

The present invention further provides a method for producing an organopolysiloxane having a tertiary amino group in a molecular chain represented by the following general formula (1): 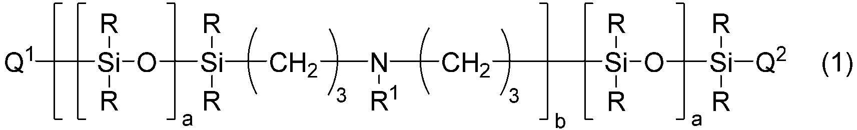
wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a group represented by the following formula (2) or the following formula (3); "a" is an integer of 1 to 400; and "b" is an integer of 1 to 50; 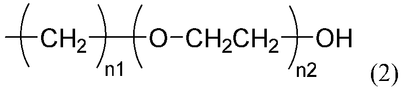
wherein, in formula (2), "n1" is an integer of 2 to 10, and "n2" is an integer of 0 to 10; 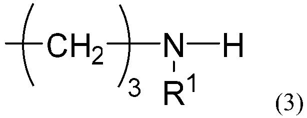
wherein, in formula (3), R¹ is a group selected from an alkyl group having 1 to 10 carbon atoms, an aryl group having 6 to 10 carbon atoms, and an aralkyl group having 7 to 10 carbon atoms,
   wherein the production method comprises a step of subjecting (A) an organopolysiloxane having a tertiary amino group in a molecular chain represented by the following general formula (4) to a reaction with (B) a (poly)ethylene glycol monoalkenyl ether represented by the following general formula (6) in the presence of a platinum catalyst to obtain an organopolysiloxane having a tertiary amino group in the molecular chain represented by said general formula (1): 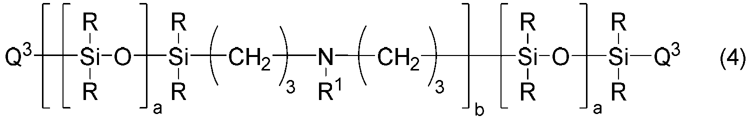
wherein, in general formula (4), R, R¹, "a", and "b" are as defined above; Q³ is, independently of each other, a hydrogen atom or a group represented by the following formula (3) or (5), and at least one Q³ per molecule is a hydrogen atom; 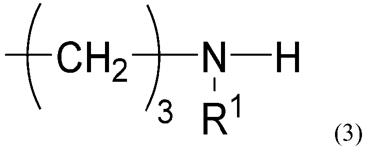 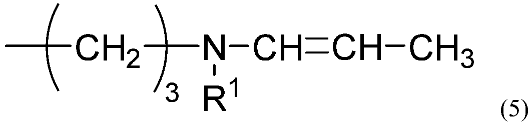
wherein, in formulas (5) and (3), R¹ is as defined above; 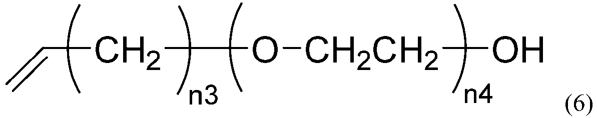
wherein, in general formula (6), "n3" is an integer of 0 to 8, and "n4" is an integer of 0 to 10.

The present invention further provides the method for producing the organopolysiloxane having a tertiary amino group in the molecular chain represented by said general formula (1), wherein the production method further comprises a step of reacting a double-terminal hydrosilyl group-containing organohydrogen polysiloxane and a tertiary amine having two allyl groups in the presence of a platinum catalyst to obtain the organopolysiloxane represented by said general formula (4).

The present invention further provides the production method, wherein the organopolysiloxane represented by said general formula (1) has 0.5 to 2 groups represented by said formula (2) as the average number of groups per molecule.

### EFFECTS OF THE INVENTION

The tertiary amino group-containing organopolysiloxane of the present invention is preferred as an intermediate compound for producing a silicone macromer having a quaternary ammonium cation site in a molecular chain in which a (meth)acrylic group is introduced in a high percentage at both terminals. Furthermore, according to the production method of the present invention, the tertiary amino group-containing organopolysiloxane can be efficiently produced. Furthermore, the tertiary amino group-containing organopolysiloxane of the present invention is useful as an intermediate for easily deriving not only the aforementioned silicone macromer, but also organopolysiloxanes having various reactive functional groups.

### BRIEF DESCRIPTION OF THE DRAWINGS

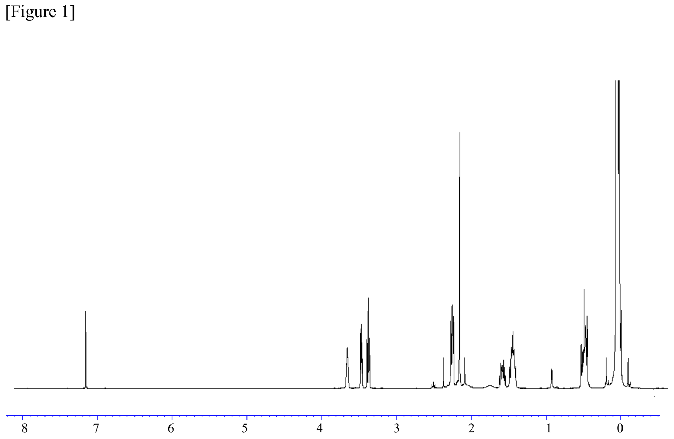

[FIG. 1] FIG. 1 is a ¹H-NMR spectral chart of an organopolysiloxane having a tertiary amino group in a molecular chain synthesized in Example 1.

### MODE FOR CARRYING OUT THE INVENTION

The present invention will be explained in detail below.

### [Organopolysiloxane having tertiary amino group in molecular chain]

An organopolysiloxane having a tertiary amino group of the present invention is represented by the following general formula (1).

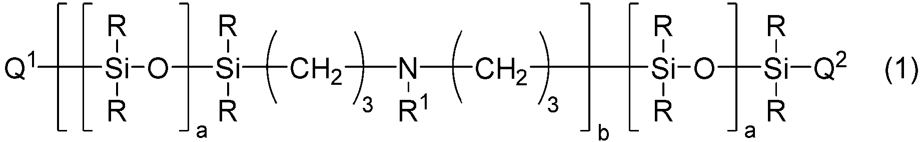

In said general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a group represented by the following formula (2) or the following formula (3); "a" is an integer of 1 to 400; and "b" is an integer of 1 to 50.

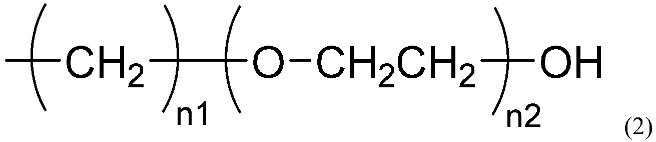

In said formula (2), "n1" is an integer of 2 to 10, and "n2" is an integer of 0 to 10.

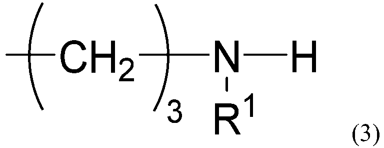

In said formula (3), R¹ is a group selected from an alkyl group having 1 to 10 carbon atoms, an aryl group having 6 to 10 carbon atoms, and an aralkyl group having 7 to 10 carbon atoms.

In said general formula (1), R is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. R is preferably a methyl group and a phenyl group, more preferably a methyl group.

In said general formulas (1) and (3), R¹ is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. In said general formulas (1) and (3), R¹ is preferably a methyl group and an ethyl group, more preferably a methyl group.

In said general formula (1), Q¹ and Q² are, independently of each other, a group represented by said formula (2) or said formula (3).

In said general formula (1), "a" is an integer of 1 to 400, preferably an integer of 1 to 100, more preferably an integer of 5 to 50. "b" is an integer of 1 to 50, preferably an integer of 1 to 30, more preferably an integer of 1 to 10.

In said formula (2), "n1" is an integer of 2 to 10, preferably an integer of 2 to 4; and "n2" is an integer of 0 to 10, preferably an integer of 1 to 6.

### [Method for producing organopolysiloxane having tertiary amino group in molecular chain]

A method for producing the organopolysiloxane having a tertiary amino group in the molecular chain represented by said general formula (1) will be explained in detail below.

The production method comprises a step of subjecting (A) an organopolysiloxane having a tertiary amino group in a molecular chain represented by the following general formula (4) to a reaction with (B) a (poly)ethylene glycol monoalkenyl ether represented by the following general formula (6) in the presence of a platinum catalyst to obtain a compound represented by said general formula (1).

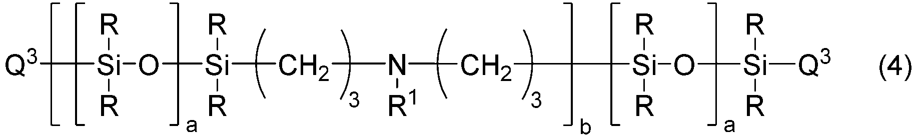

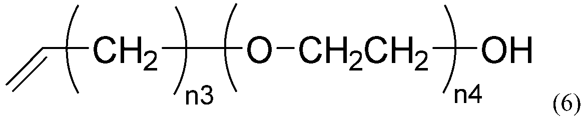

In said general formula (4), Q³ is, independently of each other, a hydrogen atom or a group represented by the following formula (3) or (5), and at least one Q³ per molecule is a hydrogen atom.

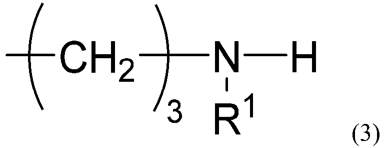

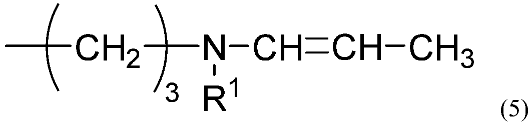

In said general formula (4), R is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. R is preferably a methyl group and a phenyl group, more preferably a methyl group.

In said general formulas (4), (3), and (5), R¹ is, independently of each other, a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include alkyl groups such as a methyl group, an ethyl group, a propyl group, a butyl group, and an octyl group; and cycloalkyl groups such as a cyclopentyl group and a cyclohexyl group. Examples of the aryl group having 6 to 10 carbon atoms include a phenyl group, a methylphenyl group, and an ethylphenyl group. Examples of the aralkyl group having 7 to 10 carbon atoms include a phenylmethyl group and a phenylethyl group. In said general formulas (4), (3), and (5), R¹ is preferably a methyl group and an ethyl group, more preferably a methyl group.

In said general formula (4), "a" is an integer of 1 to 400, preferably an integer of 1 to 100, more preferably an integer of 5 to 50. "b" is an integer of 1 to 50, preferably an integer of 1 to 30, more preferably an integer of 1 to 10.

In said general formula (6), "n3" is an integer of 0 to 8, preferably an integer of 0 to 2. "n4" is an integer of 0 to 10, preferably an integer of 1 to 6.

The organopolysiloxane represented by said general formula (4) preferably has the following structure.

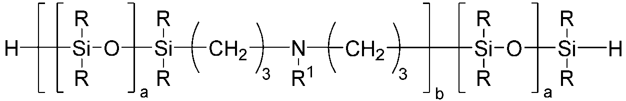

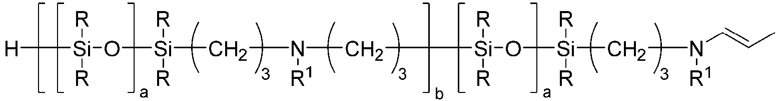

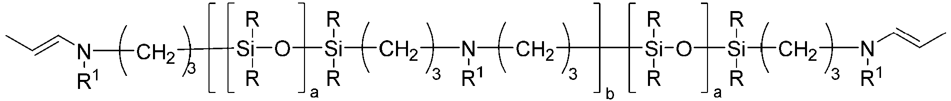

A hydrosilyl group of the organopolysiloxane is reacted with the (poly)ethylene glycol monoalkenyl ether represented by said general formula (6) to yield the organopolysiloxane of said general formula (1) having a structure represented by formula (2) at a terminal.

Further, as mentioned above, the organopolysiloxane of the present invention has a structure having the secondary amino group represented by said formula (3) at a terminal. A terminal having a tertiary amino group in the organohydrogen polysiloxane represented by said general formula (4), in which a double bond undergoes internal rearrangement due to a platinum catalyst in the production of the organohydrogen polysiloxane, is hydrolyzed in a post-treatment after a hydrosilylation reaction as shown by the following formula to provide a structure having a secondary amino group at a terminal represented by said formula (3).

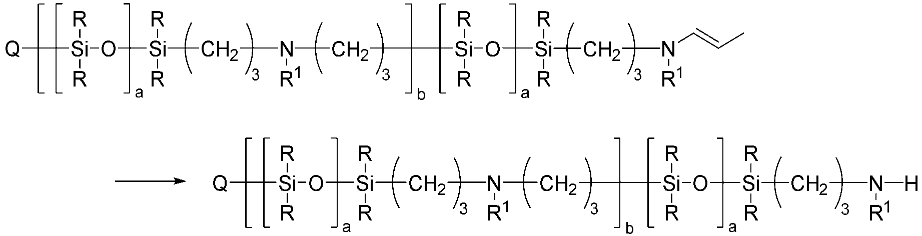

Therefore, the organopolysiloxane represented by said general formula (4) may be a compound having the following structure, or may be a mixture of a compound having a group represented by said formula (5) at a terminal and a compound having a group represented by said formula (3) at a terminal.

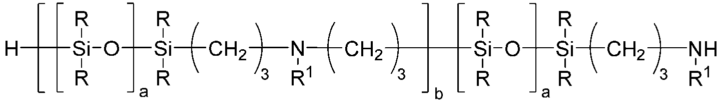

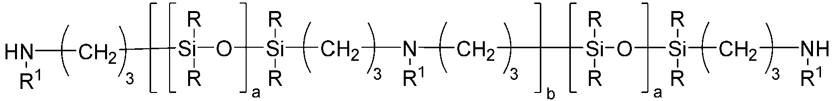

The organopolysiloxane represented by said general formula (4) may be a mixture of one, two, or more compounds selected from the aforementioned organopolysiloxanes. Preferably, in the organopolysiloxane, the number of hydrogen atoms bonded to a silicon atom is 0 to 2, more preferably 1 to 2, even more preferably 1.5 to 2, as the average number per molecule.

The organopolysiloxane represented by said general formula (1) is preferably a compound in which Q¹ and Q² both are a group represented by said formula (2), a compound in which Q¹ and Q² both are a group represented by said formula (3), a compound in which one group among Q¹ and Q² is a group represented by said formula (2) and the other group among Q¹ and Q² is a group represented by said formula (3), or a mixture of two or more compounds selected from these compounds. More preferably, in the organopolysiloxane, the number of groups represented by said formula (2) is 0 to 2, preferably 0.5 to 2, more preferably 1 to 2, even more preferably 1.5 to 2, as the average number per molecule, and the number of groups represented by said formula (3) is 0 to 2, preferably 0 to 1.5, more preferably 0 to 1, even more preferably 0 to 0.5, as the average number per molecule.

In the production method of the present invention, an excessive equivalent of the (poly)ethylene glycol monoalkenyl ether is used, relative to the organopolysiloxane. The content ratio of the (poly)ethylene glycol monoalkenyl ether is preferably 1.05 to 1.4 molar equivalents, relative to the number of moles of terminal hydrosilyl groups in the organopolysiloxane.

The (poly)ethylene glycol monoalkenyl ether used in the production method of the present invention may be a commercial product. Examples of the (poly)ethylene glycol monoalkenyl ether include allyl glycol, diethylene glycol monoallyl ether, polyethylene glycol allyl ether (product name: Uniox PKA-5001 (average molecular weight: 200), Uniox PKA-5002 (average molecular weight: 400), Uniox PKA-5003 (average molecular weight: 450), Uniox PKA-5004 (average molecular weight: 750), and Uniox PKA-5005 (average molecular weight: 1,500), each manufactured by NOF Corporation).

The catalyst used in the production method of the present invention can be a known platinum catalyst. Particularly, a sodium bicarbonate-neutralized chloroplatinic acid-vinylsiloxane complex (Karstedt's Catalyst) is more preferred. The amount of the catalyst is not particularly limited and may be any amount of the catalyst, but is preferably 10 to 1,000 ppm, relative to the mass of the double-terminal hydrosilyl group-containing organohydrogen polysiloxane.

Reaction conditions of the production method of the present invention, such as the reaction time and the solvent used, are not particularly limited. The reaction time is preferably 1 to 24 hours, more preferably 1 to 12 hours, most preferably 1 to 6 hours. The solvent is preferably aromatic hydrocarbon solvents such as toluene and xylene.

The method for producing the organopolysiloxane represented by said general formula (4) is not particularly limited, and, for example, an organohydrogen polysiloxane having a hydrosilyl group at both terminals is reacted with a tertiary amine having two allyl groups in the presence of a platinum catalyst to obtain the organopolysiloxane. In the production method, reaction conditions, such as the reaction time and the solvent used, are not particularly limited and can be appropriately set.

Preferably, the organopolysiloxane represented by said general formula (1) is produced by reacting the aforementioned double-terminal hydrosilyl group-containing organohydrogen polysiloxane with a tertiary amine having two allyl groups in an excessive equivalent of hydrosilyl groups in the presence of a platinum catalyst to obtain the organopolysiloxane represented by said general formula (4) as an intermediate, followed by adding the (poly)ethylene glycol monoalkenyl ether represented by said general formula (6) into the reaction system and, then conducting a reaction. An excessive equivalent of the double-terminal hydrosilyl group-containing organohydrogen polysiloxane is used, relative to the tertiary amine having two allyl groups. The molar ratio determines b in said general formula (1) that is the number of repeats of the silicone chain and the tertiary amino group-containing site. The content ratio of the organopolysiloxane is preferably 1.05 to 2 molar equivalents, relative to the number of moles of tertiary amine.

According to the method for producing an organopolysiloxane represented by said general formula (1), the intermediate product (4) may be isolated in an initial step before proceeding to a subsequent step, or the initial step may proceed to a subsequent step without isolation of the intermediate product (4) after the reaction of the initial step by carrying out no processing or by carrying out only evaporation of a solvent and unreacted raw materials. Examples of a production method for obtaining the organopolysiloxane represented by said general formula (1) without isolating the intermediate product (4) include reacting a double-terminal hydrosilyl group-containing organohydrogen polysiloxane with a tertiary amine having two allyl groups in the presence of a platinum catalyst, then confirming that the tertiary amine of the raw material no longer remains, followed by adding a (poly)ethylene glycol allyl ether and a platinum catalyst to the reaction solution and heating the reaction solution with stirring. After the completion of the reaction, the organopolysiloxane having the tertiary amino group in the molecular chain represented by said general formula (1) can be obtained by removing the low-boiling distillate fraction and by washing.

### EXAMPLES

The present invention will be explained in more detail with reference to the following Examples, but the present invention is not limited to the following Examples.

¹H-NMR measurements in the following Examples were carried out using Ultrashield 400 Plus (manufactured by Bruker).

### [Synthetic Example 1]

In a three-necked flask equipped with a thermometer, a stirring device, and a reflux condenser, was placed 50.0 g of a double-terminal hydrosilyl group-containing organohydrogen polysiloxane represented by the following formula, 0.2 g of a solution of a sodium bicarbonate-neutralized chloroplatinic acid-vinylsiloxane complex in toluene (platinum content of 0.5 wt%), and 17 g of toluene, and heated to 70°C. 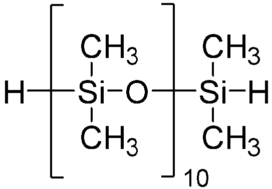 To the mixture, 5.3 g of diallylmethylamine was added dropwise over 30 minutes, followed by heating at 75°C for 2 hours with stirring. After the completion of the reaction, the low-boiling distillate fraction was removed at a reduced pressure of 0.2 kPa at 100°C for 1 hour. Then 25 g of acetonitrile and 6.3 g of water were added, and the reaction mixture was stirred, washed, and then left to stand, followed by fractionation of the silicone layer. The operation of phase separation and washing was repeated three times. The low-boiling distillate fraction was removed at a reduced pressure of 0.3 kPa at 85°C for 1.5 hours to obtain 24 g of an organopolysiloxane represented by the following formula (a): 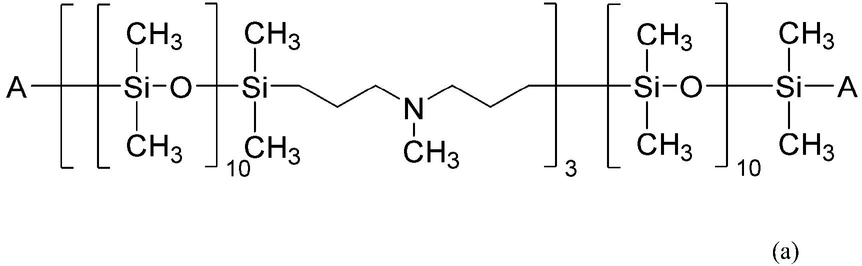 wherein, in formula (a), A is, independently of each other, a hydrogen atom or a group represented by the following formula bonded to a silicon atom. The organopolysiloxane was a mixture of compounds having two or more different types of A, wherein the number of hydrogen atoms bonded to a silicon atom was 1.8 as the average number per molecule, and the number of groups represented by the following formula (b) was 0.2 as the average number per molecule.

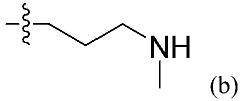

### [Example 1]

### Production of organopolysiloxane having tertiary amino group in molecular chain represented by said general formula (1)

In a three-necked flask equipped with a thermometer, a stirring device, and a reflux condenser, was placed 250.0 g of an organopolysiloxane represented by formula (a) obtained in Synthetic Example 1, 1.0 g of a solution of a sodium bicarbonate-neutralized chloroplatinic acid-vinylsiloxane complex in toluene (platinum content of 0.5 wt%), and 83 g of toluene, and heated to 70°C. To the reaction mixture, 24.3 g of allyl glycol and 0.5 g of a solution of a sodium bicarbonate-neutralized chloroplatinic acid-vinylsiloxane complex in toluene (platinum content of 0.5 wt%) were added, followed by heating at 75°C for 1.5 hours with stirring. After the completion of the reaction, the low-boiling distillate fraction was removed at a reduced pressure of 0.3 kPa at 90°C for 1 hour. Then 125 g of acetonitrile and 31 g of water were added, and the reaction mixture was stirred, washed, and then left to stand, followed by fractionation of the silicone layer. The operation of phase separation and washing was repeated three times. The low-boiling distillate fraction was removed at a reduced pressure of 0.9 kPa at 100°C for 1.5 hours to obtain 247 g of an organopolysiloxane represented by the following formula (c).

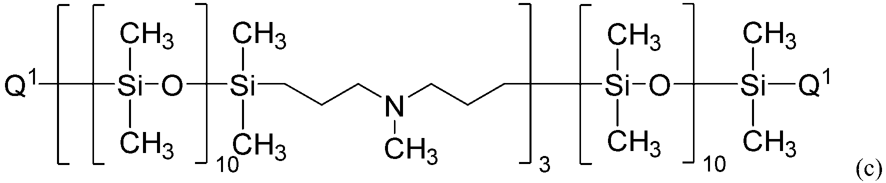

In said formula (c), Q¹ is, independently of each other, a group represented by the following formula (d) or said formula (b). The organopolysiloxane was a mixture of compounds having two or more different types of Q¹, wherein the number of groups represented by the following formula (d) was 1.8 as the average number per molecule, and the number of groups represented by said formula (b) was 0.2 as the average number per molecule.

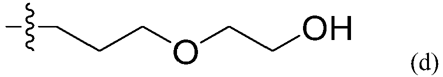

The following is the ¹H-NMR spectrum of the organopolysiloxane.
¹H-NMR (400MHz, CDCl₃): δ -0.14-0.22 (m, 264H), 0.41-0.56 (m, 16H), 1.37-1.66
(m, 16H), 2.06-2.58 (m, 21.4H), 3.42 (t, J=7.0Hz, 3.6H), 3.51 (t, J=4.6Hz, 3.6H), 3.70
(t, J=4.4Hz, 3.6H)

According to the production method of the present invention, a tertiary amino group-containing organopolysiloxane can be efficiently produced. The tertiary amino group-containing organopolysiloxane of the present invention is preferred as an intermediate compound for producing a silicone macromer having a quaternary ammonium cation site in a molecular chain in which a (meth)acrylic group is introduced in a high percentage at both terminals. Furthermore, the tertiary amino group-containing organopolysiloxane of the present invention is useful as an intermediate for easily deriving not only the aforementioned silicone macromer, but also organopolysiloxanes having various reactive functional groups.

## Claims

1. An organopolysiloxane having a tertiary amino group in a molecular chain represented by the following general formula (1): 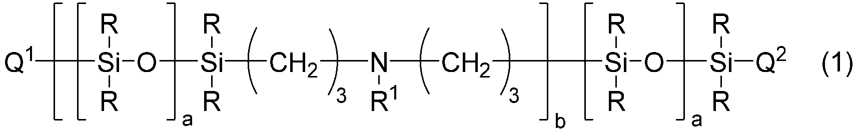
wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a group represented by the following formula (2) or the following formula (3); "a" is an integer of 1 to 400; and "b" is an integer of 1 to 50; 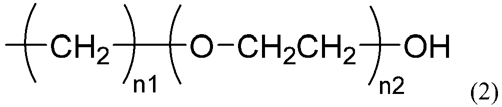
wherein, in formula (2), "n1" is an integer of 2 to 10, and "n2" is an integer of 0 to 10; 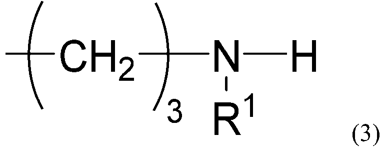
wherein, in formula (3), R¹ is a group selected from an alkyl group having 1 to 10 carbon atoms, an aryl group having 6 to 10 carbon atoms, and an aralkyl group having 7 to 10 carbon atoms.

2. The organopolysiloxane according to claim 1, wherein, in said general formula (1), Q¹ and Q² both are a group represented by said formula (2).

3. The organopolysiloxane according to claim 1, wherein, in said general formula (1), one of Q¹ and Q² is a group represented by said formula (2), and the other of Q¹ and Q² is a group represented by said formula (3).

4. The organopolysiloxane according to claim 1, wherein, in said general formula (1), Q¹ and Q² both are a group represented by said formula (3).

5. A method for producing an organopolysiloxane having a tertiary amino group in a molecular chain represented by the following general formula (1): 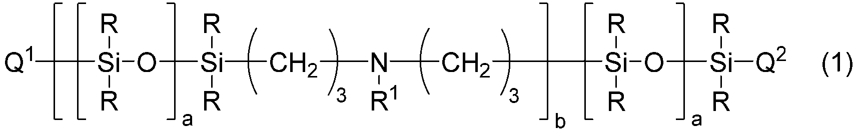
wherein, in general formula (1), R is, independently of each other, a group selected from an alkyl group having 1 to 10 carbon atoms, an aryl group having 6 to 10 carbon atoms, and an aralkyl group having 7 to 10 carbon atoms; R¹ is, independently of each other, a group selected from an alkyl group having 1 to 10 carbon atoms, an aryl group having 6 to 10 carbon atoms, and an aralkyl group having 7 to 10 carbon atoms; Q¹ and Q² are, independently of each other, a group represented by the following formula (2) or the following formula (3); "a" is an integer of 1 to 400; and "b" is an integer of 1 to 50; 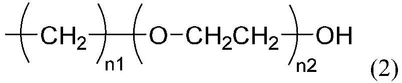
wherein, in formula (2), "n1" is an integer of 2 to 10, and "n2" is an integer of 0 to 10; 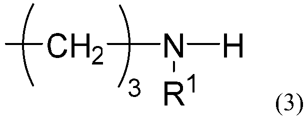
wherein, in formula (3), R¹ is a group selected from an alkyl group having 1 to 10 carbon atoms, an aryl group having 6 to 10 carbon atoms, and an aralkyl group having 7 to 10 carbon atoms,
wherein the production method comprises a step of subjecting (A) an organopolysiloxane having a tertiary amino group in a molecular chain represented by the following general formula (4) to a reaction with (B) a (poly)ethylene glycol monoalkenyl ether represented by the following general formula (6) in the presence of a platinum catalyst to obtain an organopolysiloxane having a tertiary amino group in the molecular chain represented by said general formula (1): 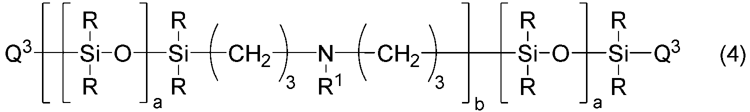
wherein, in general formula (4), R, R¹,"a", and "b" are as defined above; Q³ is, independently of each other, a hydrogen atom or a group represented by the following formula (3) or (5), and at least one Q³ per molecule is a hydrogen atom; 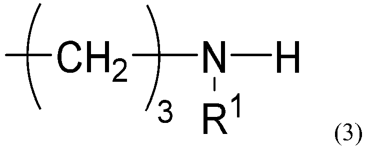 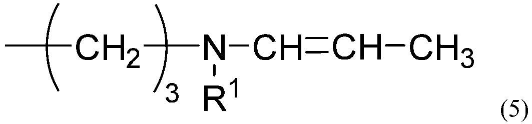
wherein, in formulas (5) and (3), R¹ is as defined above; 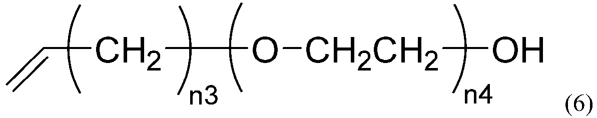
wherein, in general formula (6), "n3" is an integer of 0 to 8, and "n4" is an integer of 0 to 10.

6. The method for producing the organopolysiloxane having a tertiary amino group in the molecular chain according to claim 5, further comprising a step of reacting a double-terminal hydrosilyl group-containing organohydrogen polysiloxane and a tertiary amine having two allyl groups in the presence of a platinum catalyst to obtain the organopolysiloxane represented by said general formula (4).

7. The production method according to claim 5 or 6, wherein the organopolysiloxane represented by said general formula (1) has 0.5 to 2 groups represented by said formula (2) as the average number of groups per molecule.
